# EUROPEAN PATENT SPECIFICATION

(11) **EP 4 027 011 B1**
(45) Date of publication and mention of the grant of the patent: **18.10.2023**
(21) Application number: 21382003.8
(22) Date of filing: 10.01.2021
(51) Int. Cl.: F03D 80/50, F03D 13/10

(54) **MITIGATING VIBRATIONS IN WIND TURBINES**
VERMINDERUNG VON SCHWINGUNGEN IN WINDTURBINEN
ATTÉNUATION DES VIBRATIONS DANS DES ÉOLIENNES

(43) Date of publication of application: 13.07.2022
(73) Proprietor: General Electric Renovables España S.L., 08005 Barcelona (ES)
(72) Inventor: SCHUON, Gottfried, 08005 Barcelona (ES); CANAL, Marc, 08005 Barcelona (ES); PASTOUCHENKO, Nikolai, Niskayuna, NY New York 12309-1027 (US); VELDKAMP, Bart Jan, 4817PA Breda (NL)
(74) Representative: de Rooij, Mathieu Julien

(56) References cited:
- EP-A1- 2 562 124
- EP-A1- 3 240 952
- EP-A1- 3 514 099
- EP-B1- 2 562 124
- EP-B1- 3 240 952
- US-A1- 2012 020 798

## Description

The present disclosure relates to wind turbine blades and methods for reducing vibrations in wind turbines. More particularly, the present disclosure relates to devices for mitigating vortex induced vibrations and stall induces vibrations, and methods for reducing wind turbine vibrations when the wind turbine is parked, especially during wind turbine installation.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

There is a trend to make wind turbine blades increasingly longer to capture more wind and convert the energy of the wind into electricity. That makes blades more flexible and more prone to vibrations of the blades. Wind turbine blades vibrating excessively may get damaged. Vibrations of the rotor blades may also result in the whole wind turbine structure oscillating e.g. fore-aft oscillations, or sideways oscillations. Vibrations in the wind turbine blade may also damage other components of the wind turbine due to excessive stress.

When the wind turbine is in operation (i.e. producing energy), a wind turbine controller may operate auxiliary drive systems such as a pitch system or a yaw system to reduce or change loads on the blades. This way, vibrations of the blades may be counteracted. However, the problem of vibrations can be serious as well in circumstances when the wind turbine is parked.

When a wind turbine is parked, the wind may blow against the wind turbine from unusual directions, i.e. different from normal operation. The airflow around the wind turbine may cause the wind turbine to vibrate. Vibrations may stress and even damage one or more wind turbine components, which may compromise the performance of the wind turbine, may increase the need of reparations and may reduce the lifespan of the wind turbine. As an orientation of a wind turbine blade may not be adapted to the direction of the incoming wind, e.g. through yawing and/or pitching as when the wind turbine is operating, the effects of vibrations may be greater or different when the wind turbine is parked than when the wind turbine is operating normally and producing energy.

In particular, this may apply when the wind turbine is being installed or commissioned. For example, it may happen that an incomplete rotor is installed (e.g. a rotor having a single blade or two blades out of the total of three blades). Only a few days or a week later, the remaining blades may be installed. In the meantime, the partially installed (or "incomplete") rotor may be in standstill. The rotor may or may not be locked, and the wind turbine can be exposed to varying wind conditions. This may likewise apply if the wind turbine is stopped during several hours, days or weeks, e.g. for maintenance reasons. A wind turbine blade may start to vibrate in any of these conditions depending particularly on the direction of the wind.

EP3240952 is an example of an anti-oscillation apparatus for securing wind turbine blades against oscillations.

### SUMMARY

According to the invention, a device for mitigating vibrations of a blade of a wind turbine during standstill is provided. The device comprises a flexible base having a first connection area and a second connection area, the first connection area being configured to be attached to the second connection area to form a removable attachment. The device further comprises one or more airflow modifying elements attached to the flexible base. The flexible base is configured to fit around a portion of the rotor blade such that the removable attachment is positioned substantially at a leading edge of the blade.

Still according to the invention, a device is provided which can be fitted, e.g. wrapped around a portion of the wind turbine blade. The base is flexible so as to conform to an outer surface of the blade. The airflow modifying elements can affect the flow around the blades so as to reduce or avoid undesirable aerodynamic effects, and particularly aerodynamic effects causing vibrations of the blade. The attachment of portions of the flexible base is removable, and is located at or near a leading edge of the blade. Removal of the device from around the blade is thus facilitated, and problems related to serrated edges of the trailing edge of the blade may be avoided.

In a further aspect, the present disclosure provides a method for mitigating vibrations in a parked wind turbine blade comprising a leading edge, a trailing edge, a tip and a root. The method comprises providing a flexible base having a first connection area and a second connection area, wherein the first connection area is configured to be attached to the second connection area to form a removable attachment, and the flexible base carries one or more airflow modifying elements. The method comprises wrapping the flexible base around a portion of the wind turbine blade and attaching the first connection area to the second connection area substantially along the leading edge of the wind turbine blade. The method then comprises installing the wind turbine blade.

In accordance with this aspect, a method for mitigating vibrations in a parked wind turbine blade, and particularly during installation, is provided. The flexible base may be temporarily wrapped around a wind turbine blade, and may be removed prior to operation of the wind turbine. By placing the removable attachment near a leading edge, removal of the flexible base is facilitated by avoiding serrated edges of the trailing edge of the blade.

In yet a further aspect, a sleeve for wrapping around a portion of a wind turbine blade is provided. The sleeve comprises a first attachment portion, and a second attachment portion, wherein the first and second attachment portions are configured to form a removable connection. The sleeve further comprises one or more pockets with filler materials to form airflow modifying elements.

In accordance with this aspect, a sleeve is provided which can help to avoid vibrations of blades. Pockets can be filled with filler material that provide a suitable outer shape of the sleeve. The pockets, when filled with filler material, can form an airflow modifying element to influence the flow around the blade and thereby avoid vibrations.

Throughout the present disclosure, the terms "standstill" and "parked" are used interchangeably, and may be understood as a situation in which the wind turbine is not producing electricity, and the rotor is substantially standing still. The rotor may or may not be locked in standstill. For instance, a wind turbine may be parked or in standstill during installation and/or commissioning. A wind turbine may also be parked for e.g. maintenance reasons after operating normally, i.e. producing energy.

### BRIEF DESCRIPTION OF THE DRAWINGS

Figure 1 illustrates a perspective view of one example of a wind turbine;
Figure 2 illustrates a simplified, internal view of one example of the nacelle of the wind turbine of the figure 1;
Figure 3 schematically illustrates a wind turbine blade according to an example;
Figures 4A - 4C schematically illustrate different views of a device for reducing vibrations in a wind turbine blade;
Figure 4D schematically illustrates a cross-sectional view and a top view of a sleeve according to an example;
Figure 5 schematically illustrates a sleeve according to an example mounted to a wind turbine blade, e.g. to a tip region of a wind turbine blade;
Figures 6A and 6B show omegas and how omegas may be used to attach the sleeve according to an example;
Figures 7 schematically illustrates a further example of a devices for mitigating vibrations fitted around a wind turbine blade;
Figure 8 schematically illustrates a further example of a wind turbine blade with two devices fitted around portions of the blade; and
Figures 9A and 9B schematically represent examples of a method for mitigating vibrations of a parked wind turbine by installing a sleeve around a portion of the blade, and a method for removing such a sleeve.

### DETAILED DESCRIPTION OF EXAMPLES

Reference now will be made in detail to embodiments of the invention, one or more examples of which are illustrated in the drawings. Each example is provided by way of explanation of the invention, not as a limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

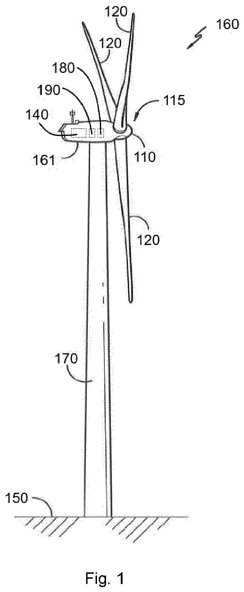

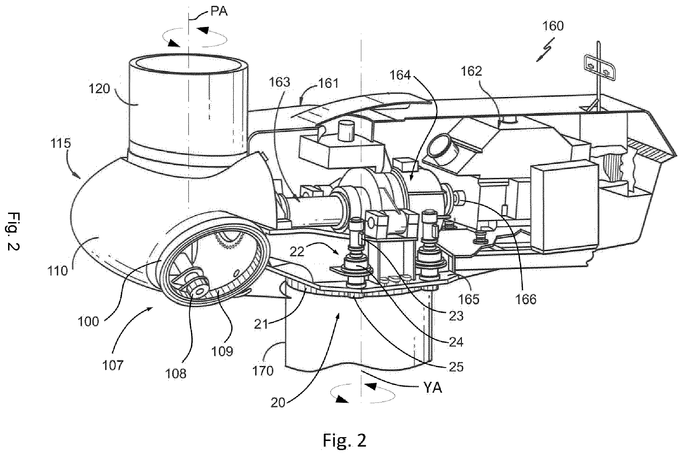

Figure 1 illustrates a perspective view of one example of a wind turbine 160. As shown, the wind turbine 160 includes a tower 170 extending from a support surface 150, a nacelle 161 mounted on the tower 170, and a rotor 115 coupled to the nacelle 161. The rotor 115 includes a rotatable hub 110 and at least one rotor blade 120 coupled to and extending outwardly from the hub 110. For example, in the illustrated embodiment, the rotor 115 includes three rotor blades 120. However, in an alternative embodiment, the rotor 115 may include more or less than three rotor blades 120. Each rotor blade 120 may be spaced about the hub 110 to facilitate rotating the rotor 115 to enable kinetic energy to be transferred from the wind into usable mechanical energy, and subsequently, electrical energy. For instance, the hub 110 may be rotatably coupled to an electric generator 162 (figure 2) positioned within the nacelle 161 to permit electrical energy to be produced.

Figure 2 illustrates a simplified, internal view of one example of the nacelle 161 of the wind turbine 160 of figure 1. As shown, the generator 162 may be disposed within the nacelle 161. In general, the generator 162 may be coupled to the rotor 115 of the wind turbine 160 for generating electrical power from the rotational energy generated by the rotor 115. For example, the rotor 115 may include a main rotor shaft 163 coupled to the hub 110 for rotation therewith. The generator 162 may then be coupled to the rotor shaft 163 such that rotation of the rotor shaft 163 drives the generator 162. For instance, in the illustrated embodiment, the generator 162 includes a generator shaft 166 rotatably coupled to the rotor shaft 163 through a gearbox 164.

It should be appreciated that the rotor shaft 163, gearbox 164, and generator 162 may generally be supported within the nacelle 161 by a support frame or bedplate 165 positioned atop the wind turbine tower 170.

The nacelle 161 is rotatably coupled to the tower 170 through the yaw system 20 in such a way that the nacelle 161 is able to rotate about a yaw axis YA. The yaw system 20 comprises a yaw bearing having two bearing components configured to rotate with respect to the other. The tower 170 is coupled to one of the bearing components and the bedplate or support frame 165 of the nacelle 161 is coupled to the other bearing component. The yaw system 20 comprises an annular gear 21 and a plurality of yaw drives 22 with a motor 23, a gearbox 24 and a pinion 25 for meshing with the annular gear 21 for rotating one of the bearing components with respect to the other.

Blades 120 are coupled to the hub 110 with a pitch bearing 100 in between the blade 120 and the hub 110. The pitch bearing 100 comprises an inner ring and an outer ring. A wind turbine blade may be attached either at the inner bearing ring or at the outer bearing ring, whereas the hub is connected at the other. A blade 120 may perform a relative rotational movement with respect to the hub 110 when a pitch system 107 is actuated. The inner bearing ring may therefore perform a rotational movement with respect to the outer bearing ring. The pitch system 107 of Figure 2 may comprise a pinion 108 that meshes with an annular gear 109 provided on the inner bearing ring to set the wind turbine blade into rotation around a pitch axis PA.

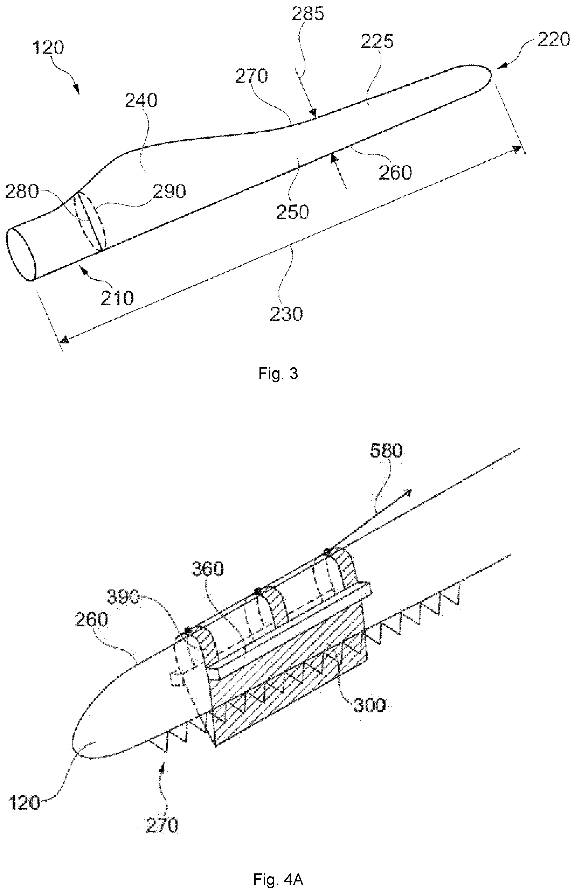

A schematic perspective view of a wind turbine blade 120, e.g. one of the rotor blades 120 shown in figure 1, is illustrated as an example in figure 3. The rotor blade 120 includes a blade root 210, a blade tip 220, a leading edge 260 and a trailing edge 270. The blade root 210 is configured for mounting the rotor blade 120 to the hub 110 of a wind turbine 160. The wind turbine blade 120 extends lengthwise between the blade root 210 and the blade tip 220. A span 230 defines a length of the rotor blade 120 between said blade root 210 and blade tip 220. A chord 280 at a given position of the blade is an imaginary straight line joining the leading edge 260 and the trailing edge 270, the cross-section generally having airfoil shaped cross-section. As is generally understood, a chordwise direction is substantially perpendicular to a spanwise direction. Also, the chord 280 may vary in length 285 as the rotor blade 120 extends from the blade root 210 to the blade tip 220. The wind turbine blade 120 also includes a pressure side 240 and a suction side 250 extending between the leading edge 260 and the trailing edge 270. A tip region 225 may be understood as a portion of a wind turbine blade 120 that may be close to the tip 220. The rotor blade 120, at different spanwise positions, has different aerodynamic profiles and thus can have airfoil shaped cross-sections 290, such as a symmetrical or cambered airfoil-shaped cross-section. Close to a root of the blade, the cross-section of the blade may be rounded, even circular or almost circular. Closer to a tip of the blade, the cross-section of the blade may have an airfoil shape.

When a wind turbine is parked or stopped, vibrations caused by the air flowing around the wind turbine, in particular around the wind turbine blades, may stress and damage the wind blades and the wind turbine. The wind turbine rotor may or may not be locked in these situations.

At least two oscillations or vibrations may happen particularly when the turbine is parked. The first ones are so-called vortex induced vibrations (VIVs), and may arise when an angle of attack for a blade or airfoil portion is around 90 degrees. Vortex shedding may contribute to enhance the wind turbine blade oscillation. The second ones are stall induced vibrations (SIVs), and may arise when the angle of attack is close to stall angles (e.g. 15 degrees - 20 degrees). The angle of attack may be understood as a geometrical angle between a flow direction of the wind and the chord of a rotor blade.

Devices or sleeves 300 as described herein may reduce vibrations when the wind turbine is parked and the performance of the wind turbine may not be negatively affected as the sleeve may be removed before the wind turbine starts normal operation. Such a sleeve 300 may be particularly useful during installation and/or commissioning of a wind turbine. It may be also useful if the wind turbine is stopped, e.g. for maintenance.

Figures 4A - 4C schematically illustrate different views of a device for reducing vibrations in a wind turbine blade;

Figure 4A schematically illustrates a device for mitigating vibrations of a blade 120 of a wind turbine during standstill. The device comprises a flexible base 300 having a first connection area and a second connection area, the first connection area being configured to be attached to the second connection area to form a removable attachment. The device may include one or more airflow modifying elements 360 attached to the flexible base, and the flexible base 300 is configured to fit around a portion of the rotor blade such that the removable attachment is positioned substantially at a leading edge 260 of the blade.

The flexible base is flexible enough to conform at least partially to an outer surface of the blade i.e. it is not necessary that the flexible base follows the outer contour of the blade very strictly.

The device may be formed as a sleeve, or may be formed into a sleeve e.g. by folding upon itself. A sleeve may herein be regarded as a cover that can be wrapped around a portion of the blade to cover the portion, and thereby assumes a somewhat cylindrical shape. The sleeve does not need to be continuous around 360° and may comprise a plurality of openings or transparent or translucent portions for allowing viewing of the blade, and may in some examples with openings or cut-outs include strips 390 of material to complete the 360º around the portion of the blade.

The removable attachment may be configured to be opened remotely. Thus, when the blade is mounted to the hub, the attachment may be removed by an operator(s). The operator(s) may in different examples be in the hub, in a crane, or on the ground for removing the attachment.

In some examples, the removable attachment may comprise a removable locking element 590. The removable locking element may be a pin or cable that maintains fasteners in place. In a specific example, the locking element may be a steel cable with a plastic cover.

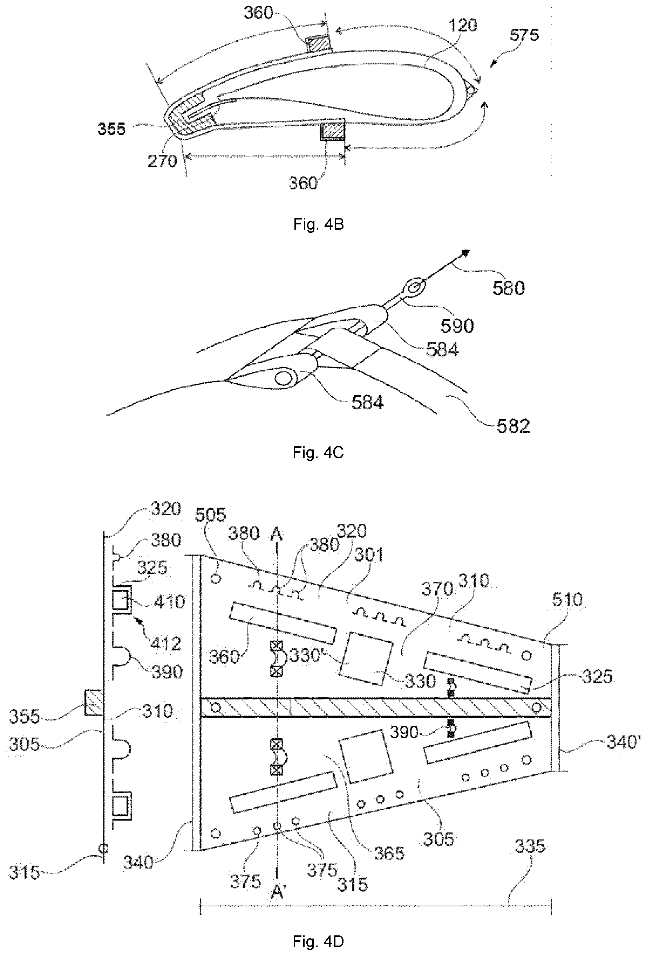

In some examples, the device may comprise a line 580 attached to the removable locking element, see e.g. figure 4C. A line may herein be regarded as any kind of cable, cord, or rope. The line may be held by an operator or device positioned in the hub to pull the locking element 590.

In some examples, the first connection area of the device may include a first series of fasteners 584, and the second connection area includes a second series of fasteners 582, wherein the first series of fasteners is configured to mate with, engage with or fit in the second series of fasteners 582, and wherein the first fasteners 584 are secured to the second fasteners 582 with the removable locking element 590. In the example of figure 4C, the fasteners may interleave, i.e. the first series of fasteners is positioned in between the second series of fasteners. In other examples, the first series of fasteners may be male fasteners, and the second series of fasteners may be female fasteners. The removable locking element may keep the male fasteners positioned within the female (receiving) fasteners.

In yet further examples, the removable attachment may include magnets, a zipper or hook-and-loop fasteners, e.g. Velcro^{™}.

In some examples, the flexible base may be textile based, e.g. PVC fabrics such as used in tarps may be used. The fabric may be coated for improved weather resistance. A textile based flexible base may be easily fitted around a portion of a wind turbine blade. When fitted around the portion of the blade, a cover or sleeve may be formed. Optionally, the flexible base may comprise one or more tighteners for tightening the flexible base around the portion of the rotor blade. A tightener 390 may include a first attachment point (which may be sewn or otherwise attached to the flexible base), a second attachment point, and a strip of material extending between the two attachment points. By pulling on the strip, the attachment points may be brought closer to each other, and the flexible base may thus be pulled tighter. The tightener may include a ratchet strap.

Textile based flexible bases with tighteners can be used on different blades, and may be used on different portions of blades. In such examples, there is no need to make blade-specific devices and instead the same device can be used on blades with different dimensions.

With reference again to figure 4, one or more of the airflow modifying elements 360 may be incorporated in the flexible base. Being incorporated in the flexible base may herein be understood as being included on an inside of the flexible base. I.e. an outer surface of the airflow modifying element is formed by the flexible base. In other examples, the airflow modifying elements may be mounted on an outer surface of the flexible base.

Airflow modifying elements or "deflectors" may have any suitable shape to significantly disturb the flow around a wind turbine blade. In particular, the airflow modifying elements may be chosen such that a spanwise component of an airflow is made more turbulent, or to make vortex sheddings uncoherent along the blade span. These two effects particularly may affect the occurrence of vortex induced and stall induced vibrations.

As shown in figure 4, and will be further explained herein, the flexible base may comprise one or more pockets holding a filler material to form one or more of the airflow modifying elements. A filler material may be e.g. a foam, or bulk material. By filling the pockets, the filler material gives some structural strength and stiffness to the otherwise loose and flexible pockets. The pockets may thus assume a suitable outer shape to disturb or affect the flow around the blade.

In examples, one or more of the airflow modifying elements may (also) be mounted at an outer surface of the flexible base. Any suitable airflow modifying element including e.g. a net, blocks, a straight or curved plate or fence may be used.

In some examples, one or more protectors 593 may be provided at an inside surface of the flexible base configured to be placed at a or near a trailing edge of the portion of the blade. Such protectors, shown e.g. in figure 4B may separate serrated edges of the blade from the sleeve, in order to protect tearing of the device or sleeve by serrated edges, and/or in order to avoid damages to serrated edges.

In accordance with a further aspect, a sleeve 300 may be provided for wrapping around a portion of a wind turbine blade 120. The sleeve may comprise a first attachment portion, and a second attachment portion, wherein the first and second attachment portions are configured to form a removable connection, and the sleeve further comprising one or more pockets 325 with filler materials to form airflow modifying elements.

In some examples, as will be illustrated herein, one or more of the airflow modifying elements 330 may be configured to extend along a local chord direction (see e.g. figure 4D).

In some examples, one or more of the airflow modifying elements 360 are configured to extend along a spanwise direction, see e.g. figure 4A.

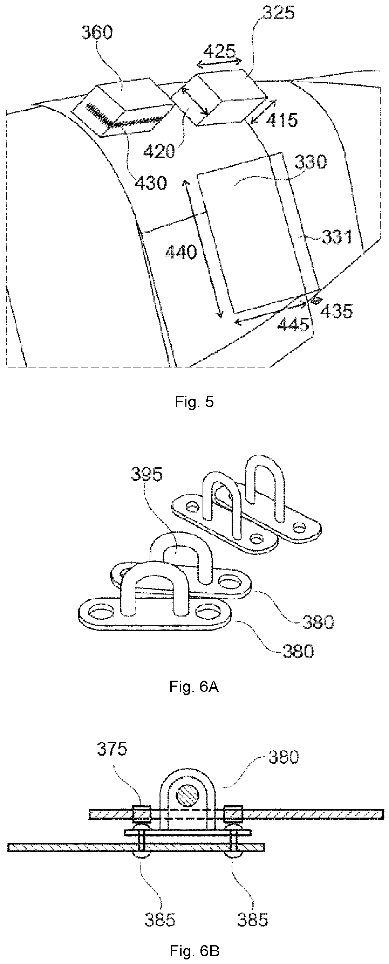

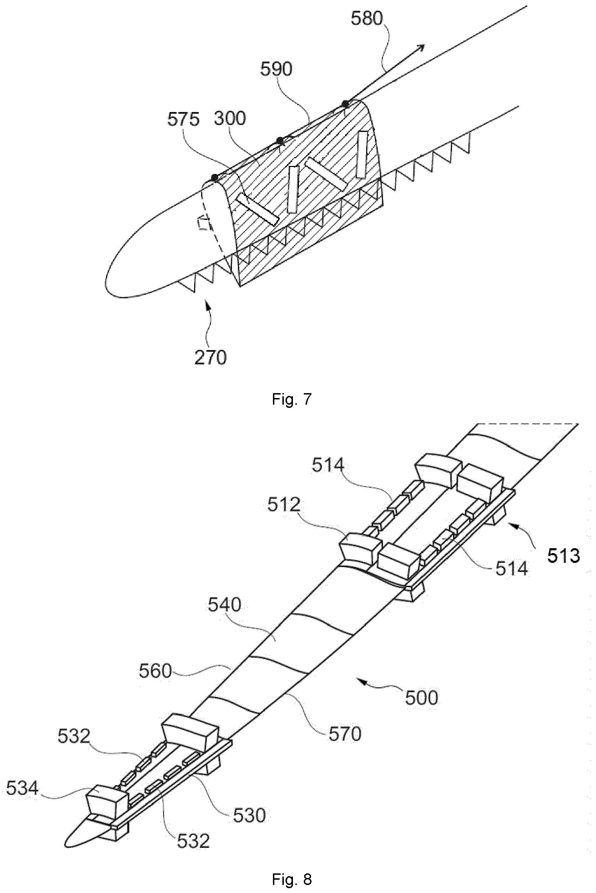

In some examples, the sleeve may comprise a plurality of airflow modifying elements extending along a spanwise direction near a leading edge (see e.g. figure 5) and a plurality of airflow modifying elements extending along a spanwise direction near a trailing edge (see e.g. figure 8).

In some examples, the sleeve may comprise airflow modifying elements both at a suction surface and at a pressure surface of the wind turbine blade (see e.g. figure 8).

Figure 4D schematically illustrates a top view of an example of a sleeve 300 and a side view (cross section along lines A-A') for wrapping a wind turbine blade 120, e.g. the wind turbine blade of figure 2 or a wind turbine blade 120 of the wind turbine 160 of figure 1.

In figure 4D, the sleeve 300 is unfolded. The sleeve 300 comprises a flexible base 301, the base 301 including an inner surface 305 configured to be placed facing the wind turbine blade 120, e.g. a suction side 250 and a pressure side 240, and an outer surface 310 configured to be placed facing away from the wind turbine blade 120. The flexible base in this example when unfolded has a substantially trapezoid shape. In other examples, the flexible base when unfolded may e.g. be substantially rectangular.

The base 301 in this example further comprises a first connection area (in this example, a first attachment edge) 315 and a second connection area (in this example, a second attachment edge) 320, the first 315 and second 320 attachment edges being configured to be placed along a leading edge 260. A sleeve 300 attached to a a portion of a blade may be seen in figure 5.

The sleeve 300 in this example further comprises a first pocket 325 configured to hold filler material 410 inside the first pocket 325. The first pocket 325 is configured to protrude outwards from the outer surface 310 when filled with a filler material 410. Accordingly, the first pocket 325 and the filler 410 may form an airflow modifying element 412. The airflow modifying element 412 may thus act as a vibration reducing element 412: by suitably modifying airflow around the blade, ViV and SiV may be avoided e.g. by causing an airflow to separate from the blade surface, by making the flow more turbulent, or diverting the flow in a certain direction.

An airfoil modifying element may be formed in this example as a pocket filled with a filler material conferring structural rigidity to the pocket. The filler material 410 may completely fill an inside of the pocket for increased stiffness.

In some examples, a filler material 410 may be a block of foam rubber of substantially the same size of the first pocket 325. In some other examples, a filler material 410 may be a plurality of blocks of foam rubber which may fill an inside of the first pocket 325 entirely.

When wrapped and releasably attached to a wind turbine blade 120, in particular to a tip region 225 of the wind turbine blade 120, the sleeve 300, and in particular the first vibration reducing element 412 may mitigate blade 120 vibrations when a wind turbine 160 is parked.

For instance, such a sleeve 300 and the first vibration reducing element 412 may mitigate wind turbine blade 120 vibrations when a wind turbine 160 is being installed and/or during commissioning of the wind turbine 160. Advantageously, the sleeve 300 may be removed from around the wind turbine blade 120 before the wind turbine 160 starts normal operation, i.e. to produce energy. Accordingly, wind turbine blade 120 vibrations may be mitigated when the wind turbine blade 160 is parked without negatively affecting the performance of the wind turbine 160 during subsequent normal operation.

As illustrated in the example of figure 5, the first pocket 325 (and in general any pocket that the sleeve may include) has a height 415, a width 420 and a length 425. In some examples, the first pocket 325 may be located in the sleeve 300, i.e. oriented with respect to the sleeve base 301, such that a direction substantially parallel to a length 425 of the first pocket 325 (when filled with filler material as in figure 5) lies substantially parallel to a leading edge 260 when the sleeve 300 is wrapped around and attached to a wind turbine blade 120. The airflow modifying element or deflector in this case extends substantially along a spanwise direction, and particularly near a leading edge of the blade.

In some other examples, the first pocket 325 may be arranged with the sleeve 300 such that a direction substantially parallel to a length 425 of the first pocket 425 (when acting as a vibration reducing element 412) lies substantially parallel to a trailing edge 270 when the sleeve 300 is wrapped around and attached to a wind turbine blade 120. If the leading edge 260 and the trailing edge 270 were substantially parallel to one another, a length 425 of the first pocket 325 may be substantially parallel to both the leading edge 260 and the trailing edge 270.

Aligning a length 425 of the first pocket 325 with a leading 260 and/or a trailing 270 edge may be particularly effective for reducing stall-induced vibrations.

In some examples, the first pocket 325 may include opening and closing fasteners 430, e.g. a zipper, which allow the pockets to be opened and closed and thus enable placing filler material 410 inside the first pocket 325. In some examples, pockets (with or without filler material) may be removably attached to the sleeve using e.g. zippers. Pockets with filler materials may thus be attached in a suitable configuration as needed. In some examples, the pockets may be attached e.g. sewn to an outside of the sleeve.

In some examples, the first pocket 325, and therefore the first airflow modifying element 412, may have a height 415 between 10 and 100 cm, more particularly between 20 and 40 cm.

In some examples, a width 420 of the first pocket 325, and therefore a width of the first airflow modifying element 412, may be substantially be the same as the height 415 of the first pocket 325. In some other examples, the width 420 of the first pocket 325 may be larger or smaller than the height 415 of the first pocket 325.

In some examples, a length 425 of the first block 325 (i.e. a spanwise extending block) may be between 0.5 and 3 m, more in particular between 1 and 2 m. I.e. its spanwise extension be between 50 cm and 3 meters, and particularly between 1 and 2 meters.

In some examples, the sleeve 300 may further comprise an add-on "deflector" 330 attached to the outer surface 310 of the base 301 of the sleeve 300. An add-on deflector 330 may perturbate or disturb air flowing around the wind turbine blade 120 when the wind turbine blade 120 is mounted to a wind turbine 160 and the wind turbine 160 is parked or stopped.

In some examples, a deflector 330 may be a substantially flat elongated plate.

In some examples, a deflector 330 may be glued, sewn or bolted to the outer surface 310 of the base 301 of the sleeve 300.

In some examples, a deflector 330 may be made from light metals or composite materials such as fiber-reinforced polymers. In some examples, a deflector 330 may be made of carbon fiber or glass fiber. A deflector 330 may thus be strong and lightweight.

In some examples, a deflector 330 may be made of porous materials. In some examples, a deflector 330 may include holes, e.g. holes crossing a width 435 of the deflector 330. In examples, the deflector 330 may be or comprise a net.

In some other examples, the sleeve 300 may comprise a second pocket 330' instead of the add-on deflector 330 attached to an outside of the sleeve. The second pocket 330' is configured to hold filler material 410 inside the second pocket 330'. Like the first pocket 325, the second pocket 330' is configured to protrude outwards when filled with a filler material 410. Accordingly, the second pocket 330' and the filler 410 may act as a second vibration reducing element or "airflow modifying element".

In some examples, a direction substantially parallel to a length 440 of the deflector 330 or of the second pocket 330' may be configured to lie substantially perpendicular to a leading edge 260 when the sleeve 300 is wrapped around and attached to a wind turbine blade 120.

As doing so may particularly perturbate or disturb air flowing in a spanwise direction, this may help to decrease vortex induced vibrations.

In some examples, a top 331 of the deflector 330 may comprise irregularities, e.g. protrusions, or recesses/notches. I.e., the deflector 330 may have a non-constant height 445 along its length 440. A top 331 may be understood as a side of the deflector 330 opposed to the side of the deflector 330 which is attached to the outer surface 310 of the base 301 of the sleeve 300. Irregularities may include protrusions and/or recesses. The irregularities may extend over the entire top 331 of the deflector 300 or may extend over a portion of it.

In some examples, the add-on deflector 330 or the second pocket 330' may have a substantially same height 445 as the first pocket 325. In some other examples, the deflector 330 or the second pocket 330' may be taller than the first pocket 325. I.e., a height 445 of the deflector 330 may be larger than a height 415 of the first pocket 325. In some examples, a height 445 of the chordwise extending deflector 330 or the second pocket 330' may be between 1.2 and 3 times bigger than a height 415 of the spanwise extending first pocket 325.

The higher the deflector 330 or the second pocket 330', the greater the airflow deflection and the vibration reduction may be.

In some examples, a length 440 of the deflector 330 or the second pocket 330' (i.e. an airflow modifying element extending predominantly in a chordwise direction) may be between 50 cm and 3 m.

In some examples, a length 335 of a sleeve base 301 may be between 2 and 6 m, and more in particular between 4 and 5 m. In some examples, a width 340, 340' of a sleeve base 301 may be between 2 and 6 m.

In some examples, the base 301 and pockets (e.g. the first 325 and second 330' pockets) may be integrally formed. In some examples, the base 301 and the pockets 301 may be made of plastic material. In an example, polyvinyl chloride (PVC) may be used.

As also illustrated in figures 4D and 5, additional pockets, e.g. a third pocket 360, may be provided in the sleeve 300. The number of pockets (and deflectors) as well as their location on the sleeve outer surface 310 may be chosen according to a desired level of vibration attenuation. Computer simulations, including e.g. computational fluid dynamics and finite element analysis may be used to select the number and position of the pockets and deflectors.

The sleeve 300 may have a first portion 365 configured to be placed on the suction side 250 and a second portion 370 configured to be placed on the pressure side 240. Thus, pocket(s) and deflector(s) may be placed in at least one of the suction side 250 and the pressure side 240. The examples of figure 4D shows that the sleeve 300 includes pockets and deflectors in both the first portion 365 and the second portion 370. This may enhance vibration reduction with respect to examples where vibration reducing elements are placed only in one of the first or the second sleeve portions.

In some examples, the sleeve 300 may include one or more tighteners 390, e.g. ratchet straps. The tighteners may help to adjust the sleeve 300 around the wind turbine blade 120. The tighteners 390 may be sewn to the base 301 of the sleeve in some examples.

In some examples, the sleeve 300 may further comprise a protection element 355, attached to the inner surface 305 of the sleeve base 301 configured to be placed along a trailing edge 270. The protection element 355 may extend along an entire length 335 of the sleeve 300. In some examples, the protection element 355 may be made of foam. In some examples, the protection element 355 may be placed between the first portion 365 of the sleeve 300 and the second portion 370 of the sleeve 300, e.g. as illustrated in figure 4D.

The protection element 355 may prevent the serrations of a wind turbine blade 120 to engage with the sleeve base 301. This may avoid the sleeve 300 getting stuck on the serrations when separating and descending the sleeve 300 from the wind turbine blade 120. The life service of the sleeve 300 may be extended and the lowering of the sleeve 300 may be easier and faster than without the presence of the protection element 355.

In some examples, the first connection area or attachment edge 315 may comprise holes or rings 375 as illustrated in figure 4D. In some of these examples, the second connection area or attachment edge 320 may comprise brackets, e.g. omega shaped brackets 380 which may attached to the base 301, such that the rings may be placed over the corresponding omegas for closing the sleeve 300. A locking element or pin 590 may be passed through the brackets 380, i.e. through holes 395 (see figure 6A), in order to attach the first 315 and second 320 attachment edges to one another and retain them in that position.

In some other examples, the second attachment edge 320 may include the rings 375 and the first attachment edge 315 may include the brackets 380. Still in some other examples, the attachment edges 315, 320 may not have holes and attached brackets, but the holes may be made on site and the omegas 380 and bracket pins or bolts 385 for attaching the brackets 380 to e.g. the first attachment edge 315 used once a wind turbine blade 120 has been covered by the sleeve 300. It should also be clear that the omega shape of the brackets is merely one option, and that other rounded or straight shapes of brackets are possible as well.

Also, as noted before having the connection areas for forming a removable attachment at the edges of the flexible base is merely one example. In other examples, the connection areas are not necessarily located along opposite edges of a flexible base. When such a flexible base is formed into a sleeve an excess portion of flexible base may extends beyond the leading edge. Depending on the implementation, fittings, or mountings for handling may be included in such an excess portion.

In some examples, the omega shaped brackets 380 may include holes 395 (e.g. through which a rope or cable (or other locking element) 590 may be passed. Pulling the locking element 590, e.g. by an operator, may cause the separation of the first 315 and second 320 attachment edges. The locking element may have a feature to ensure that it does not move or falls out during installation and handling of the blade. For example, the locking element may have a tearable, or removable connection to the sleeve with e.g. adhesive tape. In other examples, the locking element 590 may have a local widening or increased dimension that gives sufficient friction with the (omega-shaped) brackets 380 for maintaining the locking element in place during handling, but the friction can be overcome by an operator pulling.

As the locking element 590 may be operated from a distance from the sleeve 300 and the blade 120, e.g. via a line 580 and from the hub, the sleeve 300 may be easily and rapidly lowered.

The locking element 590 may be attached, e.g. tied, to an end 505 of the first 315 or second 320 attachment edges, as illustrated in figure 4D. Thus, if the rope 500 has been passed through the holes 395 of the omegas 380 and tied to an end 505, when pulling the rope 590, the first 315 and second 320 attachment ends may start to separate at the opposite end (end 510) and continue separating towards where the rope 590 has been attached to 505.

Similarly, in figures 4A-4C, the locking element 590 may be directly or indirectly (e.g. through an additional rope) attached to an end of a first or second connection areas. In these figures the locking element 590 may also have a diameter, in some examples a local diameter, which may provide sufficient friction with fasteners 582, 584 to keep the connection areas attached.

In some examples, as illustrated in figure 6B, the brackets 380 may be attached to a first connection area, and to a second connection area. By removing a locking element 590 the connection areas may be separated from each other.

In some examples, magnetic fasteners may be used to attach a first connection area to a second connection area. In further examples, frangible fasteners may be used. E.g. by pulling, the fasteners are broken.

Figure 7 schematically illustrates a further example of a device 300 for mitigating vibrations fitted around a wind turbine blade. The wind turbine blade of this example again includes a serrated trailing edge 270. The device 300 may again be formed as a flexible sleeve adapted to conform to an outer surface of the blade. As has already been illustrated in other examples, a removable attachment may be formed at or near a leading edge of the blade. A locking element 590 may be attached to a rope 580 which may be pulled e.g. by an operator in the hub or nacelle. Removing the locking element can separate a first connection area configured to be attached to the second connection area from each other.

In the example of figure 7, the device 300 comprises a plurality of elongated airflow modifying elements 575. Pairs of the airflow modifying elements form a V-shape. The airflow modifying elements 575 may thus act as vortex generators. The airflow modifying elements 575 may be formed as pockets filled with a suitable filler material, and/or may be elements or add-ons deflectors attached to an outside of the device.

Figure 8 schematically illustrates a further example of a wind turbine blade with two devices fitted around portions of the blade. In this example, a pressure surface 540 of a blade 500 is shown. The blade 500 has a leading edge 560, and a trailing edge 570. Two devices or "sleeves" have been fitted at different spanwise positions around different portions of the blade. A first sleeve 513 may be closer to a root of the blade, e.g. at a spanwise position of between 30 and 70% of the span of the blade. The sleeve 513 includes a plurality of (predominantly) spanwise extending airflow modifying elements 514, both near the leading edge and near the trailing edge of the portion of the blade. Sleeve 513 in this example also includes a plurality of (predominantly) chordwise extending airflow modifying elements 512. In this example, two of the airflow modifying elements 512 are arranged behind one another along a local chord of the blade. The chordwise extending airflow modifying elements may be higher than the other airflow modifying elements.

A second sleeve 530 may be fitted closer to a tip of the blade, e.g. at a spanwise position between 70 and 100% of the span of the blade, and in this example, between 80 and 95% of the span of the blade. The sleeve 530 may have a similar configuration as sleeve 513. The sleeve 530 includes a plurality of (predominantly) spanwise extending airflow modifying elements 532, both near the leading edge and near the trailing edge of the portion of the blade. Sleeve 530 in this example also includes a plurality of (predominantly) chordwise extending airflow modifying elements 534. In this example, two of the airflow modifying elements 512 are arranged behind one another along a local chord of the blade.

The dimensions of the airflow modifying elements may be different in both sleeves and tailored to local needs. In further examples, multiple sleeves may be attached to the same blade, and the airflow modifying elements in each of the sleeves may be very different.

Although not shown in all detail, it should be clear that sleeves 513 and 530 also incorporate or carry airflow modifying elements at a suction surface of the blade.

The airflow modifying elements of these examples may once again be formed as pockets incorporated in the sleeve and filled with filler material, or may be add-ons as has been illustrated with reference to other examples.

In yet further examples, three or more sleeves may be fitted around different portions of a blade.

In another aspect, a method for mitigating vibrations for a parked wind turbine blade comprising a leading edge 260, a trailing edge 270, a tip 220 and a root 210 is provided. The method may be used particularly during installation and/or during commissioning of the wind turbine. The method may potentially also be used when the wind turbine may be stopped after it has been operating (i.e. producing energy), e.g. during maintenance or repair.

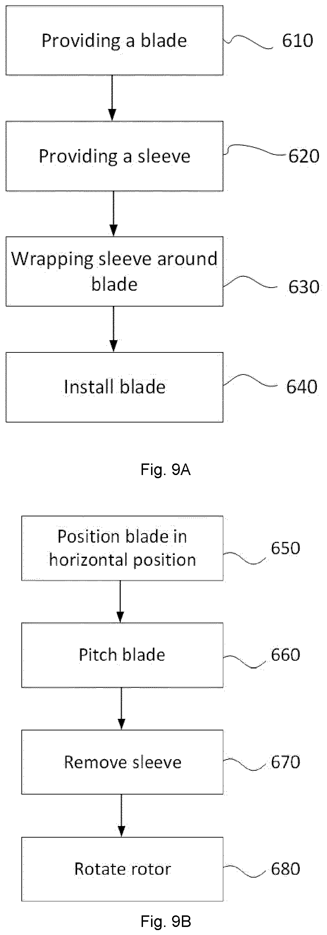

The method of figure 9A comprises providing, at block 610, a wind turbine blade. The wind turbine blade may be a "standard" blade, i.e. it does not need to be adapted in any way to be suitable for the methods and devices provided herein.

At block 620, a sleeve is provided. The sleeve may comprise a flexible base having a first connection area and a second connection area, wherein the first connection area is configured to be attached to the second connection area to form a removable attachment, and the flexible base carries one or more airflow modifying elements. Any of the herein disclosed examples of figures 4-8 may be used.

At block 630, the flexible base may be wrapped around a portion of the wind turbine blade and the first connection area may be attached to the second connection area substantially along the leading edge of the wind turbine blade. The sleeve may thus be wrapped around a portion of the blade. In some examples, multiple sleeves may be wrapped around the same blade. One sleeve may be closer to a tip of a blade, e.g. at a position between 70 and 100% of a span of the blade, and specifically between 70 and 90% of a span. Another sleeve may be closer to a root of the blade, e.g. at a position between 30 and 70% of a span of the blade.

In some examples, wrapping may take place on the ground, and particularly after a blade has arrived at a wind turbine site. One or more operators may take the sleeve and place the inner surface of the sleeve base facing the wind turbine blade, i.e. the pressure side and the suction side of the blade.

For attaching the areas of the flexible base, brackets 380 and corresponding bracket pins 385 may be used in some examples, as explained with respect to figures 4D, 6A and 6B. As also commented before, other fasteners may be used. For example, the two attachment edges 315, 320 may be put together by zipping a zipper. In further examples, the attachment edges may be connected to each other using Velcro or similar.

In some examples, the pockets may be filled and/or the deflectors may be attached to the sleeve before wrapping the sleeve 300 around the blade 120. In some other examples, this may be done before the wrapping. Still in some other examples, this may be done after the wrapping.

At block 640, the blade may then be installed. The sleeve may stay wrapped around the blade until operation is started. In examples, the method may further comprise removing the flexible base from the wind turbine blade prior to starting operation.

In some examples, the sleeve may include some form of tightening mechanism 390. Tightening one or more tighteners may be sufficient to adjust the sleeve 300 to the blade 120 and attaching a rope to secure the sleeve 300 to the blade 120 when lifting the blade 120 may not be necessary.

When the sleeve 300 is wrapped and attached on the ground, the method may further comprise lifting the blade 120 and mounting it to the wind turbine. The blade 120 may be first attached to the hub 110 and the hub 110 and the blade 120 may be lifted together, or the hub 100 may be mounted first and then the blade 120 with the sleeve 300 may be lifted and connected to the hub 110.

Once the blade 120 with the sleeve 300 is mounted to the wind turbine 160, the vibration reducing elements, namely one or more filled pockets, and optionally one or more deflectors, may reduce wind turbine blade 120 vibrations, e.g. vortex induced vibrations and/or stall induced vibrations.

In some examples, the flexible base may be removed by positioning the rotor blade in a substantially horizontal position with the trailing edge pointing downwards; and detaching the first connection area from the second connection area.

In examples, a method according to figure 9B may be used for removing a sleeve from around the blade. At block 650, a wind turbine blade may be positioned in a substantially horizontal position, i.e. close to a three o'clock position or close to a nine o'clock position. This may involve rotating the hub with blades to a suitable position, which may be done under the action of the wind, or may involve a specific tool which may act on a part of the geartrain to rotate the rotor.

When the wind turbine blade is in a substantially horizontal position, the blade may be pitched at block 660, if the trailing edge of the blade is not pointing downwards yet. This may involve pitching the blades e.g. over an angle of 90º.

When the trailing edge of the wind turbine blade is pointing downwards, the removable attachment at the leading edge is at an upper side of the blade. If the attachment is then removed, i.e. the sleeve is opened by separating the first and second connection areas or separating the first 315 and second 320 attachment edges, the sleeve can fall of the blade. In this manner, the sleeve may be removed from the blade, at block 670, and the serrated edges may not interfere, i.e. parts of the sleeve may not get stuck on the serrated edges. In particular, a protection element 355 may avoid the sleeve getting stuck with the wind turbine blade serrations.

In order to remove the sleeve, a locking element 590 as illustrated in other examples may be removed. The locking element 590 may be pulled e.g. from a hub of the wind turbine. The locking element 590 may be attached to a rope 580 from which an operator may pull the locking element 590. The rope 580 or locking element 590 may be attached to another point of the sleeve using e.g. a further rope or cable with some slack. In this manner, the sleeve may still be controlled after it has been opened, so that it can be lowered in a controlled manner.

In some examples, another tagline or rope may be attached to another part of the sleeve, and a further operator, e.g. from a crane or the ground may be used to further control the lowering of the sleeve. Both the trajectory and the speed of lowering may be controlled from the hub and/or from the ground or a crane.

In some examples, a rope may also be attached to the sleeve 300, e.g. tied to it, when lifting the rotor blade 120 and/or when lowering it in order to control the position of the sleeve 300 along the blade 120 and/or control the speed at which the sleeve is lowered. After a sleeve has been removed from a blade, or after all sleeves have been removed from around the blade, the rotor may be rotated to a next position in which one of the blades is in a horizontal position. The sleeves may then be removed from around the next blade.

In some further non-illustrated examples, the blade 120 may be already attached to the hub 110 before the wrapping. Optionally, the wind turbine blade 120 may be already mounted to the hub 110 and the hub 110 may be already mounted to the nacelle 161. In some of these examples, one or more operators may use one or more cranes to wrap the sleeve 300 around the wind turbine blade 120.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the

## Claims

1. A device for mitigating vibrations of a blade of a wind turbine during standstill, the device comprising:
a flexible base having a first connection area and a second connection area, the first connection area being configured to be attached to the second connection area to form a removable attachment,
and one or more airflow modifying elements attached to the flexible base, wherein
the flexible base is configured to fit around a portion of the rotor blade such that the removable attachment is positioned substantially at a leading edge of the blade.

2. The device of claim 1, wherein the removable attachment is configured to be opened remotely.

3. The device of claim 1 or 2, wherein the removable attachment comprises a removable locking element.

4. The device of claim 3, comprising a line attached to the removable locking element.

5. The device of claim 3 or 4, wherein the first connection area includes a first series of fasteners, and the second connection area includes a second series of fasteners, wherein the first series of fasteners is configured to fit in the second series of fasteners, and wherein the first fasteners are secured to the second fasteners with the removable locking element.

6. The device of claim 1 or 2, wherein the removable attachment include hook-and-loop fasteners or a zipper.

7. The device of any of claims 1 - 6, wherein the flexible base is textile based, and optionally comprising one or more tighteners for tightening the flexible base around the portion of the rotor blade.

8. The device of any of claims 1 - 7, wherein one or more of the airflow modifying elements is incorporated in the flexible base.

9. The device of claim 8, wherein the flexible base comprises one or more pockets holding a filler material to form one or more of the airflow modifying elements.

10. The device of any of claims 1 - 9, wherein one or more of the airflow modifying elements is mounted at an outer surface of the flexible base.

11. The device of any of claims 1 - 10, further comprising one or more protectors at an inside surface of the flexible base configured to be placed at or near a trailing edge of the portion of the blade.

12. A wind turbine blade comprising one or more devices according to any of claims 1-11.

13. A method for mitigating vibrations in a parked wind turbine blade comprising a leading edge, a trailing edge, a tip and a root, the method comprising:
providing a flexible base having a first connection area and a second connection area, the first connection area being configured to be attached to the second connection area to form a removable attachment, and the flexible base carrying one or more airflow modifying elements;
wrapping the flexible base around a portion of the wind turbine blade;
attaching the first connection area to the second connection area substantially along the leading edge of the wind turbine blade; and
installing the wind turbine blade.

14. The method according to claim 13, further comprising removing the flexible base from the wind turbine blade prior to starting operation.

15. The method according to claim 14, wherein removing the flexible base comprises: positioning the rotor blade in a substantially horizontal position with the trailing edge pointing downwards; and
detaching the first connection area from the second connection area.

## Patentansprüche

1. Vorrichtung zur Dämpfung der Schwingungen eines Blatts einer Windkraftanlage im Stillstand, wobei die Vorrichtung Folgendes umfasst:
eine flexible Basis mit einem ersten Verbindungsbereich und einem zweiten Verbindungsbereich, wobei der erste Verbindungsbereich so konfiguriert ist, dass er an dem zweiten Verbindungsbereich angebracht werden kann, um eine entfernbare Befestigung zu bilden,
und einem oder mehreren Elementen zur Änderung der Luftströmung, die an der flexiblen Basis befestigt sind, wobei
die flexible Basis so konfiguriert ist, dass sie um einen Teil des Rotorblatts passt, so dass die abnehmbare Befestigung im Wesentlichen an einer Vorderkante des Blatts positioniert ist.

2. Vorrichtung nach Anspruch 1, wobei der abnehmbare Aufsatz so konfiguriert ist, dass er aus der Ferne geöffnet werden kann.

3. Vorrichtung nach Anspruch 1 oder 2, wobei die abnehmbare Befestigung ein abnehmbares Verriegelungselement umfasst.

4. Vorrichtung nach Anspruch 3, die eine Leine umfasst, die an dem abnehmbaren Verriegelungselement befestigt ist.

5. Vorrichtung nach Anspruch 3 oder 4, wobei der erste Verbindungsbereich eine erste Reihe von Befestigungselementen und der zweite Verbindungsbereich eine zweite Reihe von Befestigungselementen umfasst, wobei die erste Reihe von Befestigungselementen so konfiguriert ist, dass sie in die zweite Reihe von Befestigungselementen passt, und wobei die ersten Befestigungselemente mit dem entfernbaren Verriegelungselement an den zweiten Befestigungselementen befestigt sind.

6. Vorrichtung nach Anspruch 1 oder 2, wobei die abnehmbare Befestigung Klettverschlüsse oder einen Reißverschluss umfasst.

7. Vorrichtung nach einem der Ansprüche 1 bis 6, wobei die flexible Basis auf Textilien basiert und optional eine oder mehrere Spannvorrichtungen zum Festziehen der flexiblen Basis um den Teil des Rotorblatts umfasst.

8. Vorrichtung nach einem der Ansprüche 1 bis 7, wobei eines oder mehrere der luftstromverändernden Elemente in die flexible Basis integriert sind.

9. Vorrichtung nach Anspruch 8, wobei die flexible Basis eine oder mehrere Taschen umfasst, die ein Füllmaterial enthalten, um eines oder mehrere der luftstromverändernden Elemente zu bilden.

10. Vorrichtung nach einem der Ansprüche 1 bis 9, wobei eines oder mehrere der luftstromverändernden Elemente an einer Außenfläche der flexiblen Basis angebracht sind.

11. Vorrichtung nach einem der Ansprüche 1 bis 10, die ferner einen oder mehrere Schutzvorrichtungen an einer Innenfläche der flexiblen Basis umfasst, die so konfiguriert sind, dass sie an oder in der Nähe einer Hinterkante des Klingenabschnitts angeordnet werden können.

12. Ein Windturbinenblatt, das eine oder mehrere Vorrichtungen nach einem der Ansprüche 1 bis 11 umfasst.

13. Verfahren zur Dämpfung von Schwingungen in einem geparkten Windturbinenblatt, das eine Vorderkante, eine Hinterkante, eine Spitze und eine Wurzel umfasst, wobei das Verfahren umfasst:
Bereitstellen einer flexiblen Basis mit einem ersten Verbindungsbereich und einem zweiten Verbindungsbereich, wobei der erste Verbindungsbereich so konfiguriert ist, dass er an dem zweiten Verbindungsbereich angebracht werden kann, um eine abnehmbare Befestigung zu bilden, und wobei die flexible Basis ein oder mehrere luftstromverändernde Elemente trägt;
Wickeln der flexiblen Basis um einen Teil des Windturbinenblattes;
Anbringen des ersten Verbindungsbereichs an dem zweiten Verbindungsbereich im Wesentlichen entlang der Vorderkante des Windturbinenblatts; und
die Installation des Windturbinenblatts.

14. Verfahren nach Anspruch 13, das ferner das Entfernen der flexiblen Basis von dem Windturbinenblatt vor der Inbetriebnahme umfasst.

15. Verfahren nach Anspruch 14, wobei das Entfernen der flexiblen Basis Folgendes umfasst: Positionieren des Rotorblatts in einer im Wesentlichen horizontalen Position, wobei die Hinterkante nach unten zeigt; und
Lösen des ersten Verbindungsbereichs vom zweiten Verbindungsbereich.

## Revendications

1. Dispositif pour atténuer les vibrations d'une pale d'une éolienne à l'arrêt :
une base flexible comportant une première zone de connexion et une seconde zone de connexion, la première zone de connexion étant configurée pour être attachée à la seconde zone de connexion afin de former un joint amovible,
et un ou plusieurs éléments de modification du flux d'air fixés à la base flexible, dans lesquels
la base flexible est configurée pour s'adapter à une partie de la pale du rotor de manière à ce que le joint amovible soit positionné sensiblement au niveau d'un bord d'attaque de la pale.

2. Le dispositif de la revendication 1, dans lequel le joint amovible est configuré pour être ouvert à distance.

3. Le dispositif de la revendication 1 ou 2, dans lequel le joint amovible comprend un élément de verrouillage amovible.

4. Le dispositif de la revendication 3, comprenant une ligne attachée à l'élément de verrouillage amovible.

5. Le dispositif de la revendication 3 ou 4, dans lequel la première zone de connexion comprend une première série de fixations, et la deuxième zone de connexion comprend une deuxième série de fixations, dans lequel la première série de fixations est configurée pour s'adapter à la deuxième série de fixations, et dans lequel les premières fixations sont fixées aux deuxièmes fixations avec l'élément de verrouillage amovible.

6. Le dispositif de la revendication 1 ou 2, dans lequel l'attache amovible comprend des fermetures auto-agrippantes ou une fermeture à glissière.

7. Le dispositif de l'une des revendications 1 à 6, dans lequel la base flexible est à base de textile, et comprenant éventuellement un ou plusieurs tendeurs pour serrer la base flexible autour de la partie de la pale du rotor.

8. Le dispositif de l'une des revendications 1 à 7, dans lequel un ou plusieurs des éléments de modification du flux d'air sont incorporés dans la base flexible.

9. Le dispositif de la revendication 8, dans lequel la base flexible comprend une ou plusieurs poches contenant un matériau de remplissage pour former un ou plusieurs des éléments de modification du flux d'air.

10. Le dispositif de l'une des revendications 1 à 9, dans lequel un ou plusieurs des éléments de modification du flux d'air sont montés sur une surface extérieure de la base flexible.

11. Le dispositif de l'une des revendications 1 à 10, comprenant en outre un ou plusieurs protecteurs sur une surface intérieure de la base flexible configurée pour être placée au niveau ou à proximité d'un bord de fuite de la partie de la lame.

12. Une pale d'éolienne comprenant un ou plusieurs dispositifs selon l'une des revendications 1 à 11.

13. Une méthode d'atténuation des vibrations dans une pale d'éolienne en stationnement comprenant un bord d'attaque, un bord de fuite, une pointe et une racine, consistant à
fournir une base flexible ayant une première zone de connexion et une seconde zone de connexion, la première zone de connexion étant configurée pour être attachée à la seconde zone de connexion pour former un joint amovible, et la base flexible portant un ou plusieurs éléments de modification du flux d'air ;
enrouler la base flexible autour d'une partie de la pale de l'éolienne ;
fixer la première zone de connexion à la seconde zone de connexion sensiblement le long du bord d'attaque de la pale de l'éolienne ; et
l'installation de la pale de l'éolienne.

14. La méthode selon la revendication 13, comprenant en outre l'enlèvement de la base flexible de la pale de l'éolienne avant le début de l'opération.

15. La méthode selon la revendication 14, dans laquelle l'enlèvement de la base flexible comprend : le positionnement de la pale de rotor dans une position sensiblement horizontale avec le bord de fuite pointant vers le bas ; et
détacher la première zone de connexion de la deuxième zone de connexion.
